# EUROPEAN PATENT SPECIFICATION

(11) **EP 3 855 061 B1**
(45) Date of publication and mention of the grant of the patent: **07.05.2025**
(21) Application number: 19862332.4
(22) Date of filing: 18.03.2019
(51) Int. Cl.: F17C 5/06

(54) **HYDROGEN FILLING STATION CONTROL SYSTEM AND METHOD, AND HYDROGEN FILLING STATION**
SYSTEM UND VERFAHREN ZUR STEUERUNG EINER WASSERSTOFFFÜLLSTATION UND WASSERSTOFFFÜLLSTATION
SYSTÈME ET PROCÉDÉ DE COMMANDE DE STATION DE REMPLISSAGE D'HYDROGÈNE, ET STATION DE REMPLISSAGE D'HYDROGÈNE

(30) Priority: 21.09.2018 CN 201811110278
(43) Date of publication of application: 28.07.2021
(73) Proprietor: ZTTCE HYDROGEN CO.,LTD, Juegang Town, Rudong County Nantong City, Jiangsu Province (CN)
(72) Inventor: HE, Guangli, Beijing 102209 (CN); ZHANG, Feng, Beijing 102209 (CN); XU, Zhuang, Beijing 102209 (CN); YANG, Kang, Beijing 102209 (CN)
(74) Representative: Ström & Gulliksson AB
(86) International application number: PCT/CN2019/078467
(87) International publication number: WO 2020/057073

(56) References cited:
- EP-A1- 2 977 669
- EP-A1- 3 249 281
- EP-A1- 3 263 969
- CN-A- 103 492 785
- CN-A- 106 030 187
- CN-A- 106 195 618
- JP-A- 2018 062 991
- US-A1- 2017 067 600

## Description

### Field of the Invention

The present application relates to a hydrogen filling station, in particular to a hydrogen filling station control system and method and a hydrogen filling station.

### Background of the Invention

Hydrogen energy is internationally recognized as the future green energy with the advantages of high energy efficiency, wide source, renewability, zero pollution of combustion products and the like. In recent years, many countries and regions, including the United States, Japan, China, South Korea and the European Union, have been vigorously developing hydrogen energy automobiles and actively building hydrogen filling stations and related hydrogen energy infrastructures. Using hydrogen as power has become an important application direction in the field of new energy. Hydrogen is used to fill fuel cell vehicles through a hydrogen dispenser of a hydrogen filling station, and is stored in a vehicle-mounted hydrogen cylinder in the form of high pressure.

In the prior art, the hydrogen filling station usually uses a compressor-storage tank structure, and the compressor is used to compress hydrogen and charge the storage tank with the hydrogen. For a common 35 MPa hydrogen filling station, three 45 MPa storage tanks are arranged to provide hydrogen to a 35 MPa hydrogen dispenser, and one 45 MPa compressor is arranged to inflate and pressurize the three 45 MPa storage tanks. For a common 70 MPa hydrogen filling station, three 87.5 MPa storage tanks are arranged to provide hydrogen to a 70 MPa hydrogen dispenser, and one 87.5 MPa compressor is arranged to inflate and pressurize the three 87.5 MPa storage tanks. The use of the 87.5 MPa compressor to inflate and pressurize the three 87.5 MPa storage tanks throughout the process requires higher requirements for the 87.5 MPa compressor. At the same time, operating the 87.5 MPa compressor throughout the process will also produce more power consumption. CN106195618A discloses a hydrogenation station double-compressor operation control system.

### Summary of the Invention

An objective of embodiments of the present application is to provide a hydrogen filling station control system and method and a hydrogen filling station. The hydrogen filling station control system and method and the hydrogen filling station can save the cost of the compressors and reduce the power consumption. According to a first aspect, a hydrogen filling station control system is provided according to claim 1. According to a second aspect, a hydrogen filling station control method for execution by the hydrogen filling station control system of the first aspect is provided according to claim 8. According to a third aspect, a hydrogen filling station comprising the hydrogen filling station control system of the first aspect is provided according to claim 12. According to a fourth aspect, a machine-readable storage medium is provided according to claim 13. According to a fifth aspect, a processor is provided according to claim 14.

In order to achieve the above object, an example of the present invention provides a hydrogen filling station control system, comprising: a first compressor, a second compressor, a first storage tank, a detector and a controller, wherein a discharge pressure of the first compressor is smaller than a gas storage pressure of the first storage tank, a discharge pressure of the second compressor is larger than or equal to the gas storage pressure of the first storage tank, the first compressor and the second compressor are connected to the first storage tank, and the detector is configured to detect a pressure of the first storage tank; and the controller is configured to: control the first compressor to inflate and pressurize the first storage tank; and control, when the pressure of the first storage tank is equal to a first preset pressure, the second compressor to inflate and pressurize the first storage tank.

Preferably, the system further comprises a second storage tank, wherein the discharge pressure of the first compressor is larger than or equal to a gas storage pressure of the second storage tank, the first compressor and the second compressor are also connected to the second storage tank, and the detector is also configured to detect a pressure of the second storage tank; and the controller is also configured to: control the first compressor to inflate and pressurize the second storage tank; and control, when the pressure of the second storage tank is equal to a second preset pressure, the second compressor to inflate and pressurize the second storage tank.

Preferably, the number of the first storage tank is 1, and the number of the second storage tanks is 2.

Preferably, the system further comprises: a first hydrogen dispenser, configured to fill a hydrogen storage cylinder of a user using hydrogen with hydrogen, wherein the gas storage pressure of the second storage tank is smaller than a filling pressure of the first hydrogen dispenser, the gas storage pressure of the first storage tank is larger than or equal to the filling pressure of the first hydrogen dispenser, the first storage tank and the second storage tank are connected to the first hydrogen dispenser, and the detector is also configured to detect a pressure of the hydrogen storage cylinder; and the controller is configured to: control the second storage tank to provide hydrogen to the first hydrogen dispenser; and control, when the pressure of the hydrogen storage cylinder is equal to a third preset pressure, the first storage tank to provide hydrogen to the first hydrogen dispenser.

Preferably, the system further comprises: a second hydrogen dispenser, wherein a discharge pressure of the second storage tank is larger than or equal to a filling pressure of the second hydrogen dispenser, the first storage tank and the second storage tank are connected to the second hydrogen dispenser, and the controller is also configured to: control the second storage tank to provide hydrogen to the second hydrogen dispenser; and control, when the pressure of the hydrogen storage cylinder is equal to a fourth preset pressure, the first storage tank to provide hydrogen to the second hydrogen dispenser.

Preferably, the discharge pressure of the first compressor is 45 MPa, and the discharge pressure of the second compressor is 87.5 MPa; and the gas storage pressure of the first storage tank is 87.5 MPa, and the gas storage pressure of the second storage tank is 45 MPa.

Preferably, the filling pressure of the first hydrogen dispenser is 70 MPa, and the filling pressure of the second hydrogen dispenser is 35 MPa.

An example of the present invention also provides a hydrogen filling station control method, wherein the method uses a first compressor, a second compressor and a first storage tank, wherein a discharge pressure of the first compressor is smaller than a gas storage pressure of the first storage tank, and a discharge pressure of the second compressor is larger than or equal to the gas storage pressure of the first storage tank, the method comprising: detecting a pressure of the first storage tank; controlling the first compressor to inflate and pressurize the first storage tank; and controlling, when the pressure of the first storage tank is equal to a first preset pressure, the second compressor to inflate and pressurize the first storage tank.

Preferably, the method also uses a second storage tank, wherein the discharge pressure of the first compressor is larger than or equal to a gas storage pressure of the second storage tank, the method further comprising: detecting a pressure of the second storage tank; controlling the first compressor to inflate and pressurize the second storage tank; and controlling, when the pressure of the second storage tank is equal to a second preset pressure, the second compressor to inflate and pressurize the second storage tank.

Preferably, the method also uses a first hydrogen dispenser configured to fill a hydrogen storage cylinder of a user using hydrogen with hydrogen, wherein the gas storage pressure of the second storage tank is smaller than a filling pressure of the first hydrogen dispenser, and the gas storage pressure of the first storage tank is larger than or equal to the filling pressure of the first hydrogen dispenser, the method comprising: detecting a pressure of the hydrogen storage cylinder; controlling the second storage tank to provide hydrogen to the first hydrogen dispenser; and controlling, when the pressure of the hydrogen storage cylinder is equal to a third preset pressure, the first storage tank to provide hydrogen to the first hydrogen dispenser.

Preferably, the method also uses a second hydrogen dispenser, wherein the discharge pressure of the second storage tank is larger than or equal to a filling pressure of the second hydrogen dispenser, the method further comprising: controlling the second storage tank to provide hydrogen to the second hydrogen dispenser; and controlling, when the pressure of the hydrogen storage cylinder is equal to a fourth preset pressure, the first storage tank to provide hydrogen to the second hydrogen dispenser. An example of the present invention also provides a hydrogen filling station, comprising the hydrogen filling station control system.

An example of the present invention also provides a machine-readable storage medium, wherein the machine-readable storage medium stores an instruction thereon for making a machine execute the hydrogen filling station control method.

An example of the present invention also provides a processor, wherein the processor is configured to run a program and the program is configured to execute the hydrogen filling station control method when being run.

Through the above technical solutions, the hydrogen filling station control system and method and the hydrogen filling station provided by the present application are adopted. The hydrogen filling station control system includes: a first compressor, a second compressor, a first storage tank, a detector and a controller, wherein the detector is used to detect a pressure of the first storage tank, and the controller is used to execute the following control: for the first storage tank with a larger gas storage pressure, the first compressor with a smaller discharge pressure is firstly used for gas charging and pressurizing, and when the pressure of the first storage tank is equal to a first preset pressure, the second compressor with a larger discharge pressure is used for gas charging and pressurizing. The second compressor with a smaller gas displacement can be arranged to save the cost of the compressor and reduce the power consumption.

Other features and advantages of the embodiments of the present application will be described in detail in the Detailed Description of the Embodiments below.

### Brief Description of Drawings

The accompanying drawings are intended to provide a further understanding of the embodiments of the present application and constitute a part of the description. The accompanying drawings are used to explain the embodiments of the present application together with the Detailed Description of the Embodiments below, but do not constitute a limitation to the embodiments of the present application. In the accompanying drawings:
FIG. 1 is a schematic structural diagram of a hydrogen filling station control system provided by an embodiment of the present application;
FIG. 2 is a schematic structural diagram of a hydrogen filling station control system provided by another embodiment of the present application;
FIG. 3 is a schematic structural diagram of a hydrogen filling station control system provided by another embodiment of the present application;
FIG. 4 is a schematic structural diagram of a hydrogen filling station control system provided by another embodiment of the present application;
FIG. 5 is a schematic structural diagram of a hydrogen filling station control system provided by another embodiment of the present application;
FIG. 6 is a flow chart of a hydrogen filling station control method provided by an embodiment of the present application;
FIG. 7 is a flow chart of a hydrogen filling station control method provided by another embodiment of the present application;
FIG. 8 is a flow chart of a hydrogen filling station control method provided by another embodiment of the present application; and
FIG. 9 is a flow chart of a hydrogen filling station control method provided by another embodiment of the present application.

### Description of the reference signs

| | | | |
|---|---|---|---|
| 101 | First compressor | 102 | Second compressor |
| 201 | First storage tank | 202 | Second storage tank |
| 301 | First hydrogen dispenser | 302 | Second hydrogen dispenser. |

### Detailed Description of the Embodiments

Specific implementations of embodiments of the present application will be described in detail below in conjunction with the accompanying drawings. It should be understood that the specific implementations described herein are merely illustrative of the embodiments of the present application and are not intended to limit the embodiments of the present application.

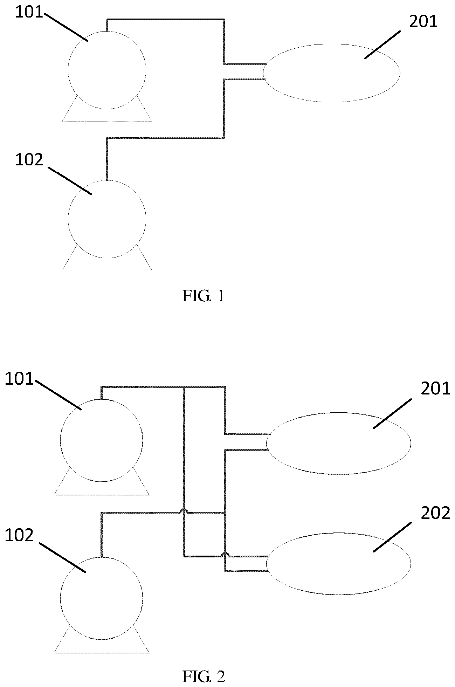

FIG. 1 is a schematic structural diagram of a hydrogen filling station control system provided by an embodiment of the present application. As shown in FIG. 1, the system includes: a first compressor 101, a second compressor 102, a first storage tank 201, a detector and a controller, wherein a discharge pressure of the first compressor 101 is smaller than a gas storage pressure of the first storage tank 201, a discharge pressure of the second compressor 102 is larger than or equal to the gas storage pressure of the first storage tank 201, the first compressor 101 and the second compressor 102 are connected to the first storage tank 201, and the detector is configured to detect a pressure of the first storage tank 201; and the controller is configured to: control the first compressor 101 to inflate and pressurize the first storage tank 201; and control, when the pressure of the first storage tank 201 is equal to a first preset pressure, the second compressor 102 to inflate and pressurize the first storage tank 201.

In the embodiment of the present application, the hydrogen filling station uses two compressors with different discharge pressures to compress hydrogen, namely, the first compressor 101 with a smaller discharge pressure and the second compressor 102 with a larger discharge pressure. Preferably, the discharge pressure of the first compressor 101 may be 45 MPa, and the discharge pressure of the second compressor 102 may be 87.5 MPa. In addition, the hydrogen filling station is also provided with a storage tank for receiving hydrogen compressed by the compressors, for example, the first storage tank 201. Compared with the two compressors used by the hydrogen filling station, the gas storage pressure of the first storage tank 201 is relatively close to the discharge pressure of the second compressor 102, and preferably, the gas storage pressure of the first storage tank 201 may be 87.5 MPa.

The controller may control the hydrogen to enter the first storage tank 201 by controlling valves, for example, a valve mounted between the first compressor 101 with a smaller discharge pressure and the first storage tank 201 and a valve between the second compressor 102 with a larger discharge pressure and the first storage tank 201. When a person wants to control a certain compressor to inflate and pressurize the first storage tank 201, the valve corresponding to the compressor may be opened, and the compressor may be started. When the person wants to control the compressor to stop gas charging and pressurizing, the valve corresponding to the compressor may be closed, and the compressor may be stopped. The detector may be located in the first storage tank 201 to detect the pressure of the first storage tank 201.

The first compressor 101 with the discharge pressure smaller than the gas storage pressure of the first storage tank 201 is firstly used to inflate and pressurize the first storage tank 201, and when the pressure of the first storage tank 201 is equal to the first preset pressure, the second compressor 102 with the discharge pressure larger than or equal to the gas storage pressure of the first storage tank 201 (for example, the discharge pressure is 87.5 MPa) is then used to inflate and pressurize the first storage tank 201. The first preset pressure may be smaller than the discharge pressure of the first compressor 101, or may be preferably equal to the discharge pressure of the first compressor 101. For example, when the discharge pressure of the first compressor 101 is 45 MPa, the first preset pressure may be smaller than or equal to 45 MPa. This embodiment may reduce the load of the second compressor 102 as much as possible, so that the second compressor 102 with a smaller gas displacement may be arranged, thereby reducing the cost of the compressors, and at the same time, the time for operating the second compressor 102 is reduced, thereby reducing the power consumption.

FIG. 2 is a schematic structural diagram of a hydrogen filling station control system provided by another embodiment of the present application. As shown in FIG. 2, the system further includes a second storage tank 202. The discharge pressure of the first compressor 101 is larger than or equal to a gas storage pressure of the second storage tank 202, the first compressor 101 and the second compressor 102 are also connected to the second storage tank 202, and the detector is also configured to detect a pressure of the second storage tank 202. The controller is also configured to: control the first compressor 101 to inflate and pressurize the second storage tank 202; and control, when the pressure of the second storage tank 202 is equal to a second preset pressure, the second compressor 102 to inflate and pressurize the second storage tank 202.

Based on the operating needs of the hydrogen filling station, storage tanks with different gas storage pressures may be arranged. For the second storage tank 202 with the gas storage pressure smaller than or equal to the discharge pressure of the first compressor 101 (preferably, the gas storage pressure may be 45 MPa), in the embodiment of the present application, the first compressor 101 with a smaller discharge pressure (for example, with a discharge pressure of 45 MPa) may be firstly controlled to inflate and pressurize the second storage tank 202, and then the second compressor 102 with a larger discharge pressure (for example, with a discharge pressure of 87.5 MPa) is controlled to inflate and pressurize the second storage tank 202. In this embodiment, the basis for switching the first compressor 101 to the second compressor 102 is whether the pressure of the second storage tank 202 reaches the second preset pressure. In this regard, the detector may be arranged in the second storage tank 202 to detect the pressure of the second storage tank 202, and the second preset pressure is preferably 90%-95% of the gas storage pressure of the second storage tank 202. The controller may also control the hydrogen to enter the second storage tank 202 by controlling a valve arranged between the second storage tank 202 and the compressor in a way similar to controlling the valve arranged between the first storage tank 201 and the compressor described above.

When the gas charging and pressurizing are about to be completed, still using the first compressor 101 with a pressure closer to a gas storage pressure of the second storage tank 202 for gas charging and pressurizing may make the gas charging and pressurizing efficiency lower. By using the above manner to inflate and pressurize the second storage tank 202, when the gas charging and pressurizing are about to be completed, using the compressor with a larger discharge pressure may make the gas charging and pressurizing efficiency higher.

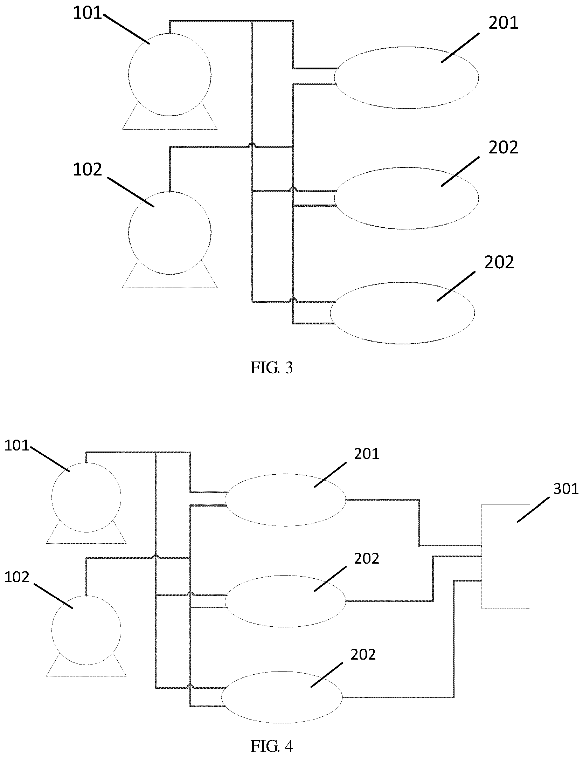

FIG. 3 is a schematic structural diagram of a hydrogen filling station control system provided by another embodiment of the present application. As shown in FIG. 3, the number of the first storage tank 201 is 1, and the number of the second storage tanks 202 is 2, but the present application is not limited to this. The number of the first storage tank 201 and the number of the second storage tank 202 can be adjusted according to actual needs.

In this embodiment, one first storage tank 201 and two second storage tanks 202 form an optimal multistage gas storage structure. When hydrogen needs to be provided to the hydrogen dispenser, regardless of the filling pressure of the hydrogen dispenser, the three storage tanks may all provide hydrogen in a relay manner. For example, when the pressure of one of the second storage tanks 202 is getting lower and lower and is not enough to meet the filling demand, the hydrogen dispenser may take hydrogen from the other second storage tank 202, and when the pressure of this second storage tank 202 is also not enough to meet the filling demand or the filling is about to end, hydrogen may be taken from the first storage tank 201, which is beneficial to reduce the energy consumption of the compressors. More specific methods for taking hydrogen will be described in detail below.

FIG. 4 is a schematic structural diagram of a hydrogen filling station control system provided by another embodiment of the present application. As shown in FIG. 4, the system further includes: a first hydrogen dispenser 301 configured to fill a hydrogen storage cylinder of a user using hydrogen with hydrogen, wherein the gas storage pressure of the second storage tank 202 is smaller than a filling pressure of the first hydrogen dispenser 301, the gas storage pressure of the first storage tank 201 is larger than or equal to the filling pressure of the first hydrogen dispenser 301, the first storage tank 201 and the second storage tank 202 are connected to the first hydrogen dispenser 301, and the detector is also configured to detect a pressure of the hydrogen storage cylinder; and the controller is configured to: control the second storage tank 202 to provide hydrogen to the first hydrogen dispenser 301; and control, when the pressure of the hydrogen storage cylinder is equal to a third preset pressure, the first storage tank 201 to provide hydrogen to the first hydrogen dispenser 301.

In the embodiment of the present application, the hydrogen filling station may fill the hydrogen storage cylinder with a hydrogen dispenser, for example, a hydrogen dispenser with a higher filling pressure, that is, the first hydrogen dispenser 301, and preferably, the filling pressure may be 70 MPa. The first hydrogen dispenser 301 may be provided with hydrogen by the first storage tank 201 with a larger gas storage pressure (for example, a gas storage pressure of 87.5 MPa) and the second storage tank 202 with a smaller gas storage pressure (for example, a gas storage pressure of 45 MPa). The controller may control the first hydrogen dispenser 301 to take hydrogen from the first storage tank 201 and the second storage tank 202 by controlling valves, for example, valves mounted between the first storage tank 201 and the first hydrogen dispenser 301 and between the second storage tank 202 and the first hydrogen dispenser 301. When a person wants to control the first hydrogen dispenser 301 to take hydrogen from a certain storage tank, the valve corresponding to the storage tank may be opened. When the person wants to control the hydrogen dispenser to stop taking hydrogen, the valve corresponding to the storage tank may be closed. The detector may be located in the first hydrogen dispenser 301.

The second storage tank 202 with the gas storage pressure of smaller than the filling pressure of the first hydrogen dispenser 301 (for example, the gas storage pressure is 45 MPa) is firstly used to provide hydrogen to the first hydrogen dispenser 301, and when the pressure of the hydrogen storage cylinder is equal to a third preset pressure, the first storage tank 201 with the gas storage pressure of larger than the filling pressure of the first hydrogen dispenser 301 (for example, the gas storage pressure is 87.5 MPa) is used to provide hydrogen to the first hydrogen dispenser 301. Due to the pipeline pressure drop in the hydrogen filling process, the outlet pressure of the hydrogen dispenser is actually about 1 MPa lower than the gas storage pressure, and therefore, the third preset pressure may be smaller than the gas storage pressure of the second storage tank 202, and is generally preferably close to the gas storage pressure of the second storage tank 202. For example, when the gas storage pressure of the second storage tank 202 is 45 MPa, the third preset pressure may be smaller than or equal to 44 MPa. In this embodiment, it is not necessary to use the first storage tank 201 with a larger gas storage pressure to provide hydrogen throughout the process, which can save the hydrogen consumption of the first storage tank 201 as much as possible, enhance the filling capacity and reduce the energy consumption of the compressors.

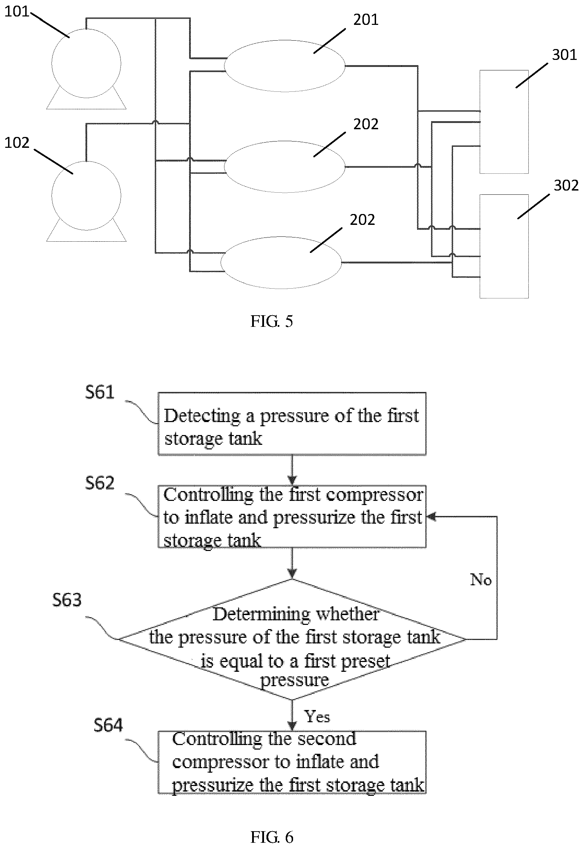

FIG. 5 is a schematic structural diagram of a hydrogen filling station control system provided by another embodiment of the present application. As shown in FIG. 5, the system further includes: a second hydrogen dispenser 302, wherein a discharge pressure of the second storage tank 202 is larger than or equal to a filling pressure of the second hydrogen dispenser 302, the first storage tank 201 and the second storage tank 202 are connected to the second hydrogen dispenser 302, and the controller is also configured to: control the second storage tank 202 to provide hydrogen to the second hydrogen dispenser 302; and control, when the pressure of the hydrogen storage cylinder is equal to a fourth preset pressure, the first storage tank 201 to provide hydrogen to the second hydrogen dispenser 302.

Based on different hydrogen demands, the hydrogen filling station may also be equipped with hydrogen dispensers with different filling pressures. For example, the second hydrogen dispenser 302 may preferably have a filling pressure of 35 MPa. In the embodiment of the present application, the second storage tank 202 with a smaller gas storage pressure (for example, a gas storage pressure of 45 MPa) may also be firstly controlled to provide hydrogen, and then the first storage tank 201 with a larger gas storage pressure (for example, a gas storage pressure of 87.5 MPa) may be controlled to provide hydrogen. In this embodiment, the basis for switching the second storage tank 202 to the first storage tank 201 is whether the pressure of the hydrogen storage cylinder reaches a fourth preset pressure. In this regard, the detector may detect the pressure of the hydrogen storage cylinder, and the fourth preset pressure is preferably 90%-95% of the gas storage pressure of the hydrogen storage cylinder. The controller may also control the second hydrogen dispenser 302 to take hydrogen from the first storage tank 201 and the second storage tank 202 by controlling valves.

By using the above manner to perform filling, when the filling is about to be completed, a storage tank with a larger gas storage pressure is used to provide hydrogen, which may enhance the filling efficiency and improve the filling capacity.

Specific embodiments using the control system of the present application are provided below:
1. For a 70 MPa-grade hydrogen filling station in which the hydrogen storage capacity is 150 kg, a compressor (with a motor power of 30 kW) with an outlet pressure of 45 MPa and a gas displacement of 500 Nm3/h@20MPa and a compressor (with a motor power of 75 kW) with an outlet pressure of 87 MPa and a gas displacement of 500 Nm3/h@20MPa are used, and according to a daily hydrogen filling capacity of 300 kg, the total energy consumption of the compressors is 384 kWh.
   In a comparative example, for a 70 MPa-grade hydrogen filling station in which the hydrogen storage capacity is 150 kg, a compressor (with a motor power of 75 kW) with an outlet pressure of 87 MPa and a gas displacement of 500 Nm3/h@20MPa is used, and according to a daily hydrogen filling capacity of 300 kg, the total energy consumption of the compressor is 600 kWh, which is higher than that in the above embodiment.
2. For a 35 MPa/70 MPa dual-mode hydrogen filling station in which the hydrogen storage capacity is 300 kg for 45 MPa and the hydrogen storage capacity is 100 kg for 87 MPa, a compressor (with a motor power of 72 kW) with an outlet pressure of 45 MPa and a gas displacement of 1200 Nm3/h@20MPa and a compressor (with a motor power of 60 kW) with an outlet pressure of 87 MPa and a gas displacement of 400 Nm3/h@20MPa are used, and the control method of the present application is used. According to a daily hydrogen filling capacity of 600 kg for 35 MPa and a daily hydrogen filling capacity of 200 kg for 70 MPa, the total energy consumption of the compressors is 605 kWh.

In a comparative example, for a 35 MPa/70 MPa dual-mode hydrogen filling station in which the hydrogen storage capacity is 300 kg for 45 MPa and the hydrogen storage capacity is 100 kg for 87 MPa, a compressor (with a motor power of 72 kW) with an outlet pressure of 45 MPa and a gas displacement of 1200 Nm3/h@20MPa and a compressor (with a motor power of 60 kW) with an outlet pressure of 87 MPa and a gas displacement of 400 Nm3/h@20MPa are used, and the control method of the present application is not used. According to a daily hydrogen filling capacity of 600 kg for 35 MPa and a daily hydrogen filling capacity of 200 kg for 70 MPa, the total energy consumption of the compressors is 724 kWh, which is higher than that in the above embodiment.

FIG. 6 is a flow chart of a hydrogen filling station control method provided by an embodiment of the present application. As shown in FIG. 6, the method uses a first compressor, a second compressor and a first storage tank, wherein a discharge pressure of the first compressor is smaller than a gas storage pressure of the first storage tank, and a discharge pressure of the second compressor is larger than or equal to the gas storage pressure of the first storage tank. The method includes:
step S61, detecting a pressure of the first storage tank;
step S62, controlling the first compressor to inflate and pressurize the first storage tank;
step S63, determining whether the pressure of the first storage tank is equal to a first preset pressure; and
step S64, controlling, when the pressure of the first storage tank is equal to the first preset pressure, the second compressor to inflate and pressurize the first storage tank.

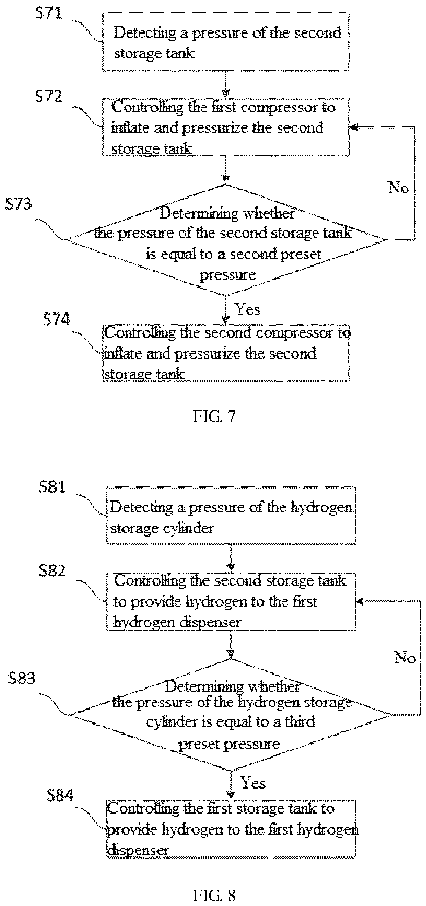

FIG. 7 is a flow chart of a hydrogen filling station control method provided by another embodiment of the present application. As shown in FIG. 7, the method also uses a second storage tank, wherein the discharge pressure of the first compressor is larger than or equal to a gas storage pressure of the second storage tank, the method further comprising:
step S71, detecting a pressure of the second storage tank;
step S72, controlling the first compressor to inflate and pressurize the second storage tank; and
step S73, determining whether the pressure of the second storage tank is equal to a second preset pressure; and
step S74, controlling, when the pressure of the second storage tank is equal to a second preset pressure, the second compressor to inflate and pressurize the second storage tank.

FIG. 8 is a flow chart of a hydrogen filling station control method provided by another embodiment of the present application. As shown in FIG. 8, the method also uses a first hydrogen dispenser configured to fill a hydrogen storage cylinder of a user using hydrogen with hydrogen, wherein the gas storage pressure of the second storage tank is smaller than a filling pressure of the first hydrogen dispenser, and the gas storage pressure of the first storage tank is larger than or equal to the filling pressure of the first hydrogen dispenser, the method comprising:
step S81, detecting a pressure of the hydrogen storage cylinder;
step S82, controlling the second storage tank to provide hydrogen to the first hydrogen dispenser;
step S83, determining whether the pressure of the hydrogen storage cylinder is equal to a third preset pressure; and
step S84, controlling, when the pressure of the hydrogen storage cylinder is equal to a third preset pressure, the first storage tank to provide hydrogen to the first hydrogen dispenser.

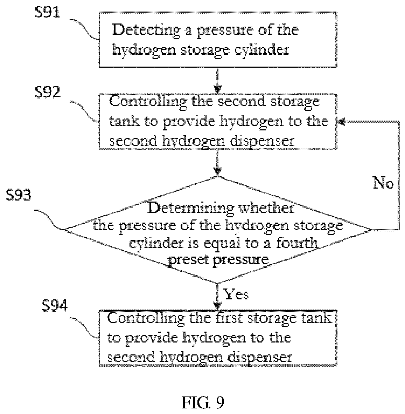

FIG. 9 is a flow chart of a hydrogen filling station control method provided by another embodiment of the present application. As shown in FIG. 9, the method also uses a second hydrogen dispenser, wherein the discharge pressure of the second storage tank is larger than or equal to a filling pressure of the second hydrogen dispenser, the method further comprising:
step S91, detecting a pressure of the hydrogen storage cylinder;
step S92, controlling the second storage tank to provide hydrogen to the second hydrogen dispenser; step S93, determining whether the pressure of the hydrogen storage cylinder is equal to a fourth preset pressure; and
step S94, controlling, when the pressure of the hydrogen storage cylinder is equal to a fourth preset pressure, the first storage tank to provide hydrogen to the second hydrogen dispenser.

The embodiments of the above method are similar those of the system described above, and will not be repeated here.

An embodiment of the present invention also provides a hydrogen filling station, comprising the hydrogen filling station control system.

An embodiment of the present invention also provides a machine-readable storage medium, wherein the machine-readable storage medium stores an instruction thereon for making a machine execute the hydrogen filling station control method.

An embodiment of the present invention also provides a processor, wherein the processor is configured to run a program and the program is configured to execute the hydrogen filling station control method when being run.

Through the above technical solutions, the hydrogen filling station control system and method and the hydrogen filling station provided by the present application are adopted. The hydrogen filling station control system includes: a first compressor, a second compressor, a first storage tank, a detector and a controller, wherein the detector is used to detect a pressure of the first storage tank, and the controller is used to execute the following control: for the first storage tank with a larger gas storage pressure, the first compressor with a smaller discharge pressure is firstly used for gas charging and pressurizing, and when the pressure of the first storage tank is equal to a first preset pressure, the second compressor with a larger discharge pressure is used for gas charging and pressurizing. The second compressor with a smaller gas displacement can be arranged to save the cost of the compressor and reduce the power consumption.

Although an alternative embodiment of the present invention has been described in detail in conjunction with the accompanying drawings, the embodiments of the present invention are not limited to the specific details of the foregoing implementation modes, and various simple modifications of the technical solution of the embodiments of the present invention can be made within the technical concept of the embodiments of the present invention, which fall within the scope of protection of the embodiments of the present invention, which is defined by the appended claims.

It should be further understood that specific technical features described in the foregoing implementation modes can be combined in any suitable manner without departing from scope of the present invention, which is defined by the appended claims.

In order to avoid unnecessary repetition, various possible combinations of the embodiments of the present invention will not be described further.

Those skilled in the art will appreciate that all or part of the steps in the method of the foregoing embodiments can be impelmented by associated hardware instructed by a program, and the program is stored in a storage medium, and comprises a plurality of instructions for causing a single chip microcomputer, chip, or processor to perform all or part of the steps of the methods described in the various embodiments herein. The foregoing storage medium comprises: a USB flash disk, a mobile hard disk, a read-only memory (ROM), a random access memory (RAM), a diskette or an optical disk and other various media capable of storing program codes.

## Claims

1. A hydrogen filling station control system, comprising:
a first compressor (101), a second compressor (102), a first storage tank (201), a detector and a controller, wherein
a discharge pressure of the second compressor (102) is larger than or equal to the gas storage pressure of the first storage tank (201), the first compressor (101) and the second compressor (102) are connected to the first storage tank (201), and
the detector is configured to detect a pressure of the first storage tank (201); and
the controller is configured to:
control the first compressor (101) to inflate and pressurize the first storage tank (201);
**characterized in that**:
a discharge pressure of the first compressor (101) is smaller than a gas storage pressure of the first storage tank (201), and the controller is further configured to:
control, when the pressure of the first storage tank (201) is equal to a first preset pressure, the second compressor (102) to inflate and pressurize the first storage tank (201).

2. The hydrogen filling station control system according to claim 1, wherein the system further comprises a second storage tank (202), wherein the discharge pressure of the first compressor (101) is larger than or equal to a gas storage pressure of the second storage tank (202), the first compressor (101) and the second compressor (102) are also connected to the second storage tank (202), and
the detector is also configured to detect a pressure of the second storage tank (202); and
the controller is also configured to:
control the first compressor (101) to inflate and pressurize the second storage tank (202); and
control, when the pressure of the second storage tank (202) is equal to a second preset pressure, the second compressor (102) to inflate and pressurize the second storage tank (202).

3. The hydrogen filling station control system according to claim 2, wherein the number of the first storage tank (201) is 1, and the number of the second storage tanks (202) is 2.

4. The hydrogen filling station control system according to claim 2, wherein the system further comprises:
a first hydrogen dispenser (301), configured to fill a hydrogen storage cylinder of a user using hydrogen with hydrogen, wherein
the gas storage pressure of the second storage tank (202) is smaller than a filling pressure of the first hydrogen dispenser (301), the gas storage pressure of the first storage tank (201) is larger than or equal to the filling pressure of the first hydrogen dispenser (301), the first storage tank (201) and the second storage tank (202) are connected to the first hydrogen dispenser (301), and the detector is also configured to detect a pressure of the hydrogen storage cylinder; and
the controller is configured to:
control the second storage tank (202) to provide hydrogen to the first hydrogen dispenser (301); and
control, when the pressure of the hydrogen storage cylinder is equal to a third preset pressure, the first storage tank (201) to provide hydrogen to the first hydrogen dispenser (301).

5. The hydrogen filling station control system according to claim 4, wherein the system further comprises: a second hydrogen dispenser (302), wherein a discharge pressure of the second storage tank (202) is larger than or equal to a filling pressure of the second hydrogen dispenser (302), the first storage tank (201) and the second storage tank (202) are connected to the second hydrogen dispenser (302), and
the controller is also configured to:
control the second storage tank (202) to provide hydrogen to the second hydrogen dispenser (302); and
control, when the pressure of the hydrogen storage cylinder is equal to a fourth preset pressure, the first storage tank (201) to provide hydrogen to the second hydrogen dispenser (302).

6. The hydrogen filling station control system according to claim 2, wherein
the discharge pressure of the first compressor (101) is 45 MPa, and the discharge pressure of the second compressor (102) is 87.5 MPa; and
the gas storage pressure of the first storage tank (201) is 87.5 MPa, and the gas storage pressure of the second storage tank (202) is 45 MPa.

7. The hydrogen filling station control system according to claim 5, wherein the filling pressure of the first hydrogen dispenser (301) is 70 MPa, and the filling pressure of the second hydrogen dispenser (302) is 35 MPa.

8. A hydrogen filling station control method for execution by a hydrogen filling station control system according to any one of claims 1-7, wherein the method uses a first compressor (101), a second compressor (102) and a first storage tank (201), wherein a discharge pressure of the second compressor (102) is larger than or equal to the gas storage pressure of the first storage tank (201), the method comprising:
detecting a pressure of the first storage tank (201);
controlling the first compressor (101) to inflate and pressurize the first storage tank (201);
**characterized in that**:
a discharge pressure of the first compressor (101) is smaller than a gas storage pressure of the first storage tank (201), and the method further comprises:
controlling, when the pressure of the first storage tank (201) is equal to a first preset pressure, the second compressor (102) to inflate and pressurize the first storage tank (201).

9. The hydrogen filling station control method according to claim 8, wherein the method also uses a second storage tank (202), wherein the discharge pressure of the first compressor (101) is larger than or equal to a gas storage pressure of the second storage tank (202), the method further comprising:
detecting a pressure of the second storage tank (202);
controlling the first compressor (101) to inflate and pressurize the second storage tank (202); and
controlling, when the pressure of the second storage tank (202) is equal to a second preset pressure, the second compressor (102) to inflate and pressurize the second storage tank (202).

10. The hydrogen filling station control method according to claim 8, wherein the method also uses a first hydrogen dispenser (301) configured to fill a hydrogen storage cylinder of a user using hydrogen with hydrogen, wherein the gas storage pressure of the second storage tank (202) is smaller than a filling pressure of the first hydrogen dispenser (301), and the gas storage pressure of the first storage tank (201) is larger than or equal to the filling pressure of the first hydrogen dispenser (301), the method comprising:
detecting a pressure of the hydrogen storage cylinder;
controlling the second storage tank (202) to provide hydrogen to the first hydrogen dispenser (301); and
controlling, when the pressure of the hydrogen storage cylinder is equal to a third preset pressure, the first storage tank (201) to provide hydrogen to the first hydrogen dispenser (301).

11. The hydrogen filling station control method according to claim 10, wherein the method also uses a second hydrogen dispenser (302), wherein the discharge pressure of the second storage tank (202) is larger than or equal to a filling pressure of the second hydrogen dispenser (302), the method further comprising:
controlling the second storage tank (202) to provide hydrogen to the second hydrogen dispenser (302); and
controlling, when the pressure of the hydrogen storage cylinder is equal to a fourth preset pressure,
the first storage tank (201) to provide hydrogen to the second hydrogen dispenser (302).

12. A hydrogen filling station, comprising the hydrogen filling station control system according to any one of claims 1-7.

13. A machine-readable storage medium, wherein the machine-readable storage medium stores an instruction thereon for making the hydrogen filling station control system according to any one of claims 1-7 execute the hydrogen filling station control method according to any one of claims 8-11.

14. A processor, wherein the processor is configured to run a program and the program is configured to cause the hydrogen filling station control system according to any one of claims 1-7 to execute the hydrogen filling station control method according any one of claims 8-11 when being run.

## Patentansprüche

1. Wasserstofftankstellen-Steuersystem, das Folgendes umfasst:
einen ersten Kompressor (101), einen zweiten Kompressor (102), einen ersten Speichertank (201), einen Detektor und eine Steuereinrichtung, wobei
ein Ausströmdruck des zweiten Kompressors (102) größer oder gleich dem Gasspeicherdruck des ersten Speichertanks (201) ist, wobei der erste Kompressor (101) und der zweite Kompressor (102) mit dem ersten Speichertank (201) verbunden sind, und
der Detektor konfiguriert ist, einen Druck des ersten Speichertanks (201) zu detektieren; und
die Steuereinrichtung konfiguriert ist:
den ersten Kompressor (101) zu steuern, den ersten Speichertank (201) zu befüllen und mit Druck zu beaufschlagen;
**dadurch gekennzeichnet, dass**
ein Ausströmdruck des ersten Kompressors (101) kleiner als ein Gasspeicherdruck des ersten Speichertanks (201) ist und die Steuereinrichtung ferner konfiguriert ist:
dann, wenn der Druck des ersten Speichertanks (201) gleich einem ersten voreingestellten Druck ist, den zweiten Kompressor (102) zu steuern, den ersten Speichertank (201) zu befüllen und mit Druck zu beaufschlagen.

2. Wasserstofftankstellen-Steuersystem nach Anspruch 1, wobei das System ferner einen zweiten Speichertank (202) umfasst, wobei der Ausströmdruck des ersten Kompressors (101) größer oder gleich einem Gasspeicherdruck des zweiten Speichertanks (202) ist, wobei der erste Kompressor (101) und der zweite Kompressor (102) auch mit dem zweiten Speichertank (202) verbunden sind, und der Detektor außerdem konfiguriert ist, einen Druck des zweiten Speichertanks (202) zu detektieren; und
die Steuereinrichtung außerdem konfiguriert ist:
den ersten Kompressor (101) zu steuern, den zweiten Speichertank (202) zu befüllen und mit Druck zu beaufschlagen; und
dann, wenn der Druck des zweiten Speichertanks (202) gleich einem zweiten voreingestellten Druck ist, den zweiten Kompressor (102) zu steuern, den zweiten Speichertank (202) zu befüllen und mit Druck zu beaufschlagen.

3. Wasserstofftankstellen-Steuersystem nach Anspruch 2, wobei die Zahl des ersten Speichertanks (201) 1 ist und die Zahl der zweiten Speichertanks (202) 2 ist.

4. Wasserstofftankstellen-Steuersystem nach Anspruch 2, wobei das System ferner Folgendes umfasst:
eine erste Wasserstoff-Ausgabevorrichtung (301), die konfiguriert ist, einen Wasserstoff-Speicherzylinder eines Anwenders unter Verwendung von Wasserstoff mit Wasserstoff zu füllen, wobei
der Gasspeicherdruck des zweiten Speichertanks (202) kleiner ist als ein Fülldruck der ersten Wasserstoff-Ausgabevorrichtung (301), der Gasspeicherdruck des ersten Speichertanks (201) größer oder gleich dem Fülldruck der ersten Wasserstoff-Ausgabevorrichtung (301) ist, der erste Speichertank (201) und der zweite Speichertank (202) mit der ersten Wasserstoff-Ausgabevorrichtung (301) verbunden sind und der Detektor außerdem konfiguriert ist, einen Druck des Wasserstoff-Speicherzylinders zu detektieren; und
die Steuereinrichtung konfiguriert ist:
den zweiten Speichertank (202) zu steuern, die erste Wasserstoff-Ausgabevorrichtung (301) mit Wasserstoff zu versorgen; und
dann, wenn der Druck des Wasserstoff-Speicherzylinders gleich einem dritten voreingestellten Druck ist, den ersten Speichertank (201) zu steuern, die erste Wasserstoff-Ausgabevorrichtung (301) mit Wasserstoff zu versorgen.

5. Wasserstofftankstellen-Steuersystem nach Anspruch 4, wobei das System ferner Folgendes umfasst: eine zweite Wasserstoff-Ausgabevorrichtung (302), wobei ein Ausgabedruck des zweiten Speichertanks (202) größer oder gleich einem Fülldruck der zweiten Wasserstoff-Ausgabevorrichtung (302) ist, der erste Speichertank (201) und der zweiten Speichertank (202) mit der zweiten Wasserstoff-Ausgabevorrichtung (302) verbunden sind, und
die Steuereinrichtung außerdem konfiguriert ist:
den zweiten Speichertank (202) zu steuern, die zweite Wasserstoff-Ausgabevorrichtung (302) mit Wasserstoff zu versorgen; und
dann, wenn der Druck des Wasserstoffspeicherzylinders gleich einem vierten voreingestellten Druck ist, den ersten Speichertank (201) zu steuern, die zweite Wasserstoff-Ausgabevorrichtung (302) mit Wasserstoff zu versorgen.

6. Wasserstofftankstellen-Steuersystem nach Anspruch 2, wobei
der Ausgabedruck des ersten Kompressors (101) 45 MPa beträgt und der Ausgabedruck des zweiten Kompressors (102) 87,5 MPa beträgt; und
der Gasspeicherdruck des ersten Speichertanks (201) 87,5 MPa beträgt und der Gasspeicherdruck des zweiten Speichertanks (202) 45 MPa beträgt.

7. Wasserstofftankstellen-Steuersystem nach Anspruch 5, wobei der Fülldruck der ersten Wasserstoff-Ausgabevorrichtung (301) 70 MPa beträgt und der Fülldruck der zweiten Wasserstoff-Ausgabevorrichtung (302) 35 MPa beträgt.

8. Steuerverfahren für eine Wasserstofftankstelle für die Ausführung durch ein Wasserstofftankstellen-Steuersystem nach einem der Ansprüche 1-7, wobei das Verfahren einen ersten Kompressor (101), einen zweiten Kompressor (102) und einen ersten Speichertank (201) verwendet, wobei ein Ausgabedruck des zweiten Kompressors (102) größer oder gleich dem Gasspeicherdruck des ersten Speichertanks (201) ist, wobei das Verfahren Folgendes umfasst:
Detektieren eines Drucks des ersten Speichertanks (201);
Steuern des ersten Kompressors (101), den ersten Speichertank (201) zu befüllen und mit Druck zu beaufschlagen;
**dadurch gekennzeichnet, dass**:
ein Ausgabedruck des ersten Kompressors (101) kleiner als ein Gasspeicherdruck des ersten Speichertanks (201) ist und das Verfahren ferner Folgendes umfasst:
dann, wenn der Druck des ersten Speichertanks (201) gleich einem ersten voreingestellten Druck ist, Steuern des zweiten Kompressors (102), den ersten Speichertank (201) zu befüllen und mit Druck zu beaufschlagen.

9. Steuerverfahren für eine Wasserstofftankstelle nach Anspruch 8, wobei das Verfahren auch einen zweiten Speichertank (202) verwendet, wobei der Ausgabedruck des ersten Kompressors (101) größer oder gleich einem Gasspeicherdruck des zweiten Speichertanks (202) ist, wobei das Verfahren ferner Folgendes umfasst:
Detektieren eines Drucks des zweiten Speichertanks (202);
Steuern des ersten Kompressors (101), den zweiten Speichertank (202) zu befüllen und mit Druck zu beaufschlagen; und
dann, wenn der Druck des zweite Speichertanks (202) gleich einem zweiten voreingestellten Druck ist, Steuern des zweiten Kompressors (102), den zweiten Speichertank (202) zu befüllen und mit Druck zu beaufschlagen.

10. Steuerverfahren für eine Wasserstofftankstelle nach Anspruch 8, wobei das Verfahren außerdem eine erste Wasserstoff-Ausgabevorrichtung (301) verwendet, die konfiguriert ist, einen Wasserstoff-Speicherzylinder eines Anwenders unter Verwendung von Wasserstoff mit Wasserstoff zu füllen, wobei der Gasspeicherdruck des zweiten Speichertanks (202) kleiner als ein Fülldruck der ersten Wasserstoff-Ausgabevorrichtung (301) ist und der Gasspeicherdruck des ersten Speichertanks (201) größer oder gleich dem Fülldruck der ersten Wasserstoff-Ausgabevorrichtung (301) ist, wobei das Verfahren Folgendes umfasst:
Detektieren eines Drucks des Wasserstoff-Speicherzylinders;
Steuern des zweiten Speichertanks (202), die erste Wasserstoff-Ausgabevorrichtung (301) mit Wasserstoff zu versorgen; und
dann, wenn der Druck des Wasserstoff-Speicherzylinders gleich einem dritten voreingestellten Druck ist, Steuern des ersten Speichertanks (201), die erste Wasserstoff-Ausgabevorrichtung (301) mit Wasserstoff zu versorgen.

11. Steuerverfahren für eine Wasserstofftankstelle nach Anspruch 10, wobei das Verfahren auch eine zweite Wasserstoff-Ausgabevorrichtung (302) verwendet, wobei der Ausgabedruck des zweiten Speichertanks (202) größer oder gleich einem Fülldruck der zweiten Wasserstoff-Ausgabevorrichtung (302) ist, wobei das Verfahren ferner Folgendes umfasst:
Steuern des zweiten Speichertanks (202), die zweite Wasserstoff-Ausgabevorrichtung (302) mit Wasserstoff zu versorgen; und
dann, wenn der Druck des Wasserstoff-Speicherzylinders gleich einem vierten voreingestellten Druck ist, Steuern des ersten Speichertanks (201), die zweite Wasserstoff-Ausgabevorrichtung (302) mit Wasserstoff zu versorgen.

12. Wasserstofftankstelle, die das Wasserstofftankstellen-Steuersystem nach einem der Ansprüche 1-7 umfasst.

13. Maschinenlesbares Speichermedium, wobei das maschinenlesbare Speichermedium eine Anweisung darauf speichert, um das Wasserstofftankstellen-Steuersystem nach einem der Ansprüche 1-7 zu veranlassen, das Steuerverfahren für eine Wasserstofftankstelle nach einem der Ansprüche 8-11 auszuführen.

14. Prozessor, wobei der Prozessor konfiguriert ist, ein Programm auszuführen, und das Programm konfiguriert ist, das Wasserstofftankstellen-Steuersystem nach einem der Ansprüche 1-7 zu veranlassen, das Steuerverfahren für eine Wasserstofftankstelle nach einem der Ansprüche 8-11 auszuführen, wenn es ausgeführt wird.

## Revendications

1. Système de commande de station de remplissage d'hydrogène, comprenant :
un premier compresseur (101), un second compresseur (102), un premier réservoir de stockage (201), un détecteur et un dispositif de commande, dans lequel
une pression de refoulement du second compresseur (102) est supérieure ou égale à la pression de stockage de gaz du premier réservoir de stockage (201), le premier compresseur (101) et le second compresseur (102) sont raccordés au premier réservoir de stockage (201), et
le détecteur est configuré pour détecter une pression du premier réservoir de stockage (201) ; et
le dispositif de commande est configuré pour :
commander le premier compresseur (101) pour gonfler et pressuriser le premier réservoir de stockage (201) ; **caractérisé en ce que** :
une pression de refoulement du premier compresseur (101) est inférieure à une pression de stockage de gaz du premier réservoir de stockage (201), et le dispositif de commande est en outre configuré pour :
commander, lorsque la pression du premier réservoir de stockage (201) est égale à une première pression prédéfinie, le second compresseur (102) pour gonfler et pressuriser le premier réservoir de stockage (201).

2. Système de commande de station de remplissage d'hydrogène selon la revendication 1, dans lequel le système comprend en outre un second réservoir de stockage (202), dans lequel la pression de refoulement du premier compresseur (101) est supérieure ou égale à une pression de stockage de gaz du second réservoir de stockage (202), le premier compresseur (101) et le second compresseur (102) sont également raccordés au second réservoir de stockage (202), et le détecteur est également configuré pour détecter une pression du second réservoir de stockage (202) ; et le dispositif de commande est également configuré pour :
commander le premier compresseur (101) pour gonfler et pressuriser le second réservoir de stockage (202) ; et
commander, lorsque la pression du second réservoir de stockage (202) est égale à une deuxième pression prédéfinie, le second compresseur (102) pour gonfler et pressuriser le second réservoir de stockage (202).

3. Système de commande de station de remplissage d'hydrogène selon la revendication 2, dans lequel le nombre de premier réservoir de stockage (201) est de 1 et le nombre de seconds réservoirs de stockage (202) est de 2.

4. Système de commande de station de remplissage d'hydrogène selon la revendication 2, dans lequel le système comprend en outre :
un premier distributeur d'hydrogène (301), configuré pour remplir un cylindre de stockage d'hydrogène d'un utilisateur au moyen d'hydrogène avec de l'hydrogène, dans lequel
la pression de stockage de gaz du second réservoir de stockage (202) est inférieure à une pression de remplissage du premier distributeur d'hydrogène (301), la pression de stockage de gaz du premier réservoir de stockage (201) est supérieure ou égale à la pression de remplissage du premier distributeur d'hydrogène (301), le premier réservoir de stockage (201) et le second réservoir de stockage (202) sont raccordés au premier distributeur d'hydrogène (301), et le détecteur est également configuré pour détecter une pression du cylindre de stockage d'hydrogène ; et le dispositif de commande est configuré pour :
commander le second réservoir de stockage (202) pour fournir de l'hydrogène au premier distributeur d'hydrogène (301) ; et
commander, lorsque la pression du cylindre de stockage d'hydrogène est égale à une troisième pression prédéfinie, le premier réservoir de stockage (201) pour fournir de l'hydrogène au premier distributeur d'hydrogène (301).

5. Système de commande de station de remplissage d'hydrogène selon la revendication 4, dans lequel le système comprend en outre : un second distributeur d'hydrogène (302), dans lequel une pression de refoulement du second réservoir de stockage (202) est supérieure ou égale à une pression de remplissage du second distributeur d'hydrogène (302), le premier réservoir de stockage (201) et le second réservoir de stockage (202) sont raccordés au second distributeur d'hydrogène (302), et
le dispositif de commande est également configuré pour :
commander le second réservoir de stockage (202) pour fournir de l'hydrogène au second distributeur d'hydrogène (302) ; et
commander, lorsque la pression du cylindre de stockage d'hydrogène est égale à une quatrième pression prédéfinie, le premier réservoir de stockage (201) pour fournir de l'hydrogène au second distributeur d'hydrogène (302).

6. Système de commande de station de remplissage d'hydrogène selon la revendication 2, dans lequel
la pression de refoulement du premier compresseur (101) est de 45 MPa, et la pression de refoulement du second compresseur (102) est de 87,5 MPa ; et
la pression de stockage de gaz du premier réservoir de stockage (201) est de 87,5 MPa, et la pression de stockage de gaz du second réservoir de stockage (202) est de 45 MPa.

7. Système de commande de station de remplissage d'hydrogène selon la revendication 5, dans lequel la pression de remplissage du premier distributeur d'hydrogène (301) est de 70 MPa, et la pression de remplissage du second distributeur d'hydrogène (302) est de 35 MPa.

8. Procédé de commande de station de remplissage d'hydrogène devant être exécuté par un système de commande de station de remplissage d'hydrogène selon l'une quelconque des revendications 1 à 7, dans lequel le procédé utilise un premier compresseur (101), un second compresseur (102) et un premier réservoir de stockage (201), dans lequel une pression de refoulement du second compresseur (102) est supérieure ou égale à la pression de stockage de gaz du premier réservoir de stockage (201), le procédé comprenant :
la détection d'une pression du premier réservoir de stockage (201) ;
la commande du premier compresseur (101) pour gonfler et pressuriser le premier réservoir de stockage (201) ; **caractérisé en ce que** :
une pression de refoulement du premier compresseur (101) est inférieure à une pression de stockage de gaz du premier réservoir de stockage (201), et le procédé comprend en outre :
la commande, lorsque la pression du premier réservoir de stockage (201) est égale à une première pression prédéfinie, du second compresseur (102) pour gonfler et pressuriser le premier réservoir de stockage (201).

9. Procédé de commande de station de remplissage d'hydrogène selon la revendication 8, dans lequel le procédé utilise également un second réservoir de stockage (202), dans lequel la pression de refoulement du premier compresseur (101) est supérieure ou égale à une pression de stockage de gaz du second réservoir de stockage (202), le procédé comprenant en outre :
la détection d'une pression du second réservoir de stockage (202) ;
la commande du premier compresseur (101) pour gonfler et pressuriser le second réservoir de stockage (202) ; et la commande, lorsque la pression du second réservoir de stockage (202) est égale à une deuxième pression prédéfinie, du second compresseur (102) pour gonfler et pressuriser le second réservoir de stockage (202).

10. Procédé de commande de station de remplissage d'hydrogène selon la revendication 8, dans lequel le procédé utilise également un premier distributeur d'hydrogène (301) configuré pour remplir un cylindre de stockage d'hydrogène d'un utilisateur au moyen d'hydrogène avec de l'hydrogène, dans lequel la pression de stockage de gaz du second réservoir de stockage (202) est inférieure à une pression de remplissage du premier distributeur d'hydrogène (301), et la pression de stockage de gaz du premier réservoir de stockage (201) est supérieure ou égale à la pression de remplissage du premier distributeur d'hydrogène (301), le procédé comprenant :
la détection d'une pression du cylindre de stockage d'hydrogène ;
la commande du second réservoir de stockage (202) pour fournir de l'hydrogène au premier distributeur d'hydrogène (301) ; et
la commande, lorsque la pression du cylindre de stockage d'hydrogène est égale à une troisième pression prédéfinie, du premier réservoir de stockage (201) pour fournir de l'hydrogène au premier distributeur d'hydrogène (301).

11. Procédé de commande de station de remplissage d'hydrogène selon la revendication 10, dans lequel le procédé utilise également un second distributeur d'hydrogène (302), dans lequel la pression de refoulement du second réservoir de stockage (202) est supérieure ou égale à une pression de remplissage du second distributeur d'hydrogène (302), le procédé comprenant en outre :
la commande du second réservoir de stockage (202) pour fournir de l'hydrogène au second distributeur d'hydrogène (302) ; et
la commande, lorsque la pression du cylindre de stockage d'hydrogène est égale à une quatrième pression prédéfinie,
du premier réservoir de stockage (201) pour fournir de l'hydrogène au second distributeur d'hydrogène (302).

12. Station de remplissage d'hydrogène, comprenant le système de commande de station de remplissage d'hydrogène selon l'une quelconque des revendications 1 à 7.

13. Support de stockage lisible par machine, dans lequel le support de stockage lisible par machine stocke une instruction sur celui-ci pour amener le système de commande de station de remplissage d'hydrogène selon l'une quelconque des revendications 1 à 7 à exécuter le procédé de commande de station de remplissage d'hydrogène selon l'une quelconque des revendications 8 à 11.

14. Processeur, dans lequel le processeur est configuré pour exécuter un programme et le programme est configuré pour amener le système de commande de station de remplissage d'hydrogène selon l'une quelconque des revendications 1 à 7 à exécuter le procédé de commande de station de remplissage d'hydrogène selon l'une quelconque des revendications 8 à 11 lorsqu'il est exécuté.
